Europäisches Patentamt

European Patent Office

Office européen des brevets

(19)

(11) Publication number: **0 013 598**
**B1**

(12) **EUROPEAN PATENT SPECIFICATION**

(45) Date of publication of patent specification: **29.09.82**

(51) Int. Cl.³: **H 04 N 3/16**

(21) Application number: **80300023.1**

(22) Date of filing: **03.01.80**

(54) Combined linearity and side pincushion correction arrangement.

(30) Priority: **10.01.79 GB 7900924**
**23.04.79 US 32252**

(43) Date of publication of application:
**23.07.80 Bulletin 80/15**

(45) Publication of the grant of the patent:
**29.09.82 Bulletin 82/39**

(84) Designated Contracting States:
**AT BE DE FR GB IT NL SE**

(56) References cited:
**FR - A - 2 335 096**

(73) Proprietor: **RCA CORPORATION**
**30 Rockefeller Plaza**
**New York, NY 10020 (US)**

(72) Inventor: **den Hollander, Willem**
**Kesslerstrasse 13**
**CH-8952 Schlieren (CH)**

(74) Representative: **Pratt, Richard Wilson et al,**
**50 Curzon Street**
**London W1Y 8EU (GB)**

Courier Press, Leamington Spa, England.

Combined linearity and side pincushion correction arrangement

This invention relates to combined side pincushion and linearity correction magnetic structures and circuits.

In typical color television receivers, two separate magnetic components are connected in series with the horizontal deflection winding: a linearity coil, and an East-West or side pincushion correction coil or transformer. The linearity coil may be wound on a rod or H-shaped core with one or more bias magnets located adjacent the core. The East-West coil may be wound on a separate ferrite rod core or on a closed core like a UU or an EE-shaped core. The East-West (E—W) coil may be part of an ITR (Integrated Thyristor Rectifier) controlled E-W modulator circuit such as described in US—A—4,088,931, by P. E. Haferl, or may be part of a diode modulator circuit such as described in US—A—3,906,305, by A. H. H. J. Nillesen.

East-West correction results in a vertical rate modulation of the horizontal deflection or scanning current. The vertical rate modulation of the horizontal scanning current, however, causes an undesirable vertical rate modulation of the magnetic bias of the linearity coil. The effect of the linearity coil is thus different at the top or bottom of the raster than in the center, resulting in uncorrected raster distortion. To correct for this effect, the biasing of the linearity coil is sometimes modulated at a vertical rate by coupling the E-W modulator current through an extra winding on the linearity coil, as described, for example, in US—A—4,024,432, by A. Boekhorst.

It would be desirable, however, to combine the functions of both side pincushion correction and linearity correction into one structure which also eliminates the aforementioned raster distortion.

Document FR—A—2335096 discloses a structure according to the pre-characterizing part of claim 1 in which the invention is set out, and to which reference should now be made.

In accordance with a preferred embodiment of the invention, a magnetic structure includes a magnetic core having first and second core portions. A first winding is wound around the first core portion and is suited for coupling to a horizontal deflection winding. The second winding is wound around the second core portion and is suited for receiving a correction current including a vertical deflection rated complement. Magnetic biasing means provides a magnetic bias flux to the first core portion for providing linearity correction to horizontal scanning current flowing in the horizontal deflection winding. The first and second core portions are so configured as to establish a high reluctance path for mutual flux linking the first and second windings, for coupling only a portion of the flux generated by the second winding to the first core portion. The winding polarities of the first and second windings are such as to enable the portion of the flux generated by the second winding to compensate for undesirable changes during vertical scan of the magnetic bias of the first core portion.

In the drawings:

Figure 1 illustrates a combined linearity and side pincushion correction magnetic structure embodying the invention;

Figure 2 illustrates an electrical schematic diagram of a deflection circuit including a modulator circuit and a combined linearity and side pincushion correction arrangement embodying the invention. The arrangement is associated with the magnetic structure of Figure 1;

Figure 3 illustrates that portion of the schematic diagram of Figure 2 including another combined arrangement embodying the invention;

Figure 4 illustrates another combined linearity and side pincushion correction magnetic structure embodying the invention. The magnetic structure is associated with the schematic diagram of Figure 3;

Figure 5 illustrates an electrical schematic diagram of a deflection circuit, including another modulator circuit and another combined linearity and side pincushion correction arrangement embodying the invention; and

Figure 6 illustrates a combined linearity and side pincushion correction magnetic structure embodying the invention, the magnetic structure being associated with the schematic of Figure 5.

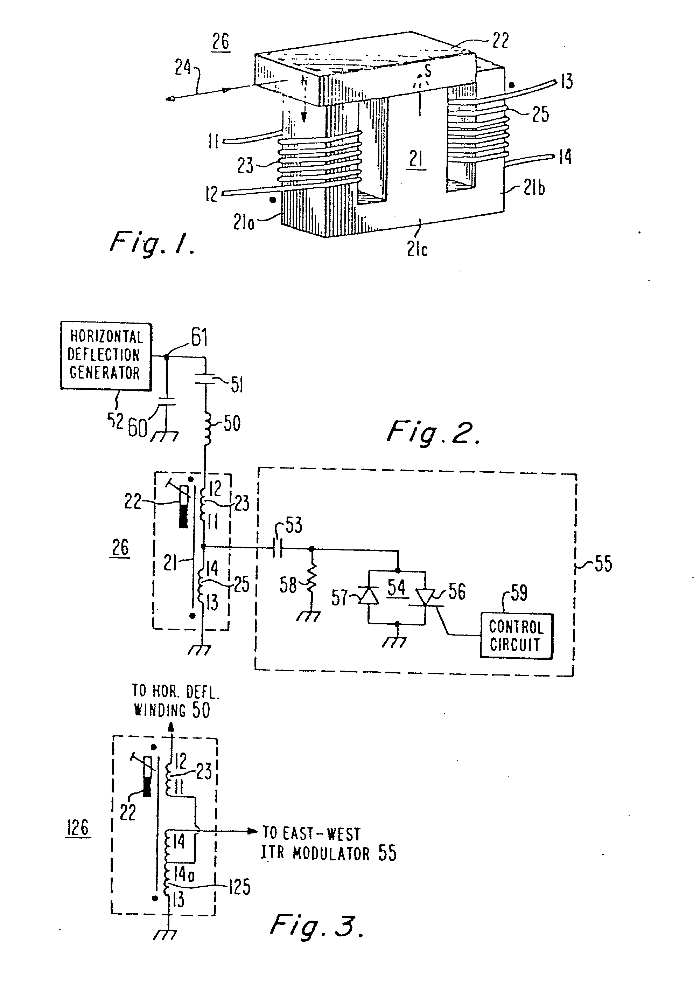

A combined linearity and side pincushion correction structure 26 embodying the invention and constructed on a single E-shaped magnetic core 21 is illustrated in Figure 1. An L-shaped portion 21a is magnetically biased by a permanent magnet 22, which has magnetic poles located on opposite ends of the surface that is in contact with the core. A south pole of magnet 22 is, illustratively, located adjacent a center leg 21c of core 21 and a north pole is located adjacent the outer L-shaped portion 21a. A winding 23, wound around portion 21a of core 21, is coupled in series with a horizontal deflection winding 50 of a horizontal deflection circuit, as illustrated in the electrical schematic diagram of Figure 2. A conductor 12 of winding 23 is coupled to one terminal of horizontal deflection winding 50. Another terminal of horizontal deflection winding 50 is coupled at a terminal 61 to a conventional horizontal deflection generator 52 through a trace capacitor 51, for producing horizontal scanning current in deflection winding 50. A horizontal retrace capacitor 60 is coupled to terminal 61.

The magnetic field in the core developed by permanent magnet 22 and by the current flowing in winding 23 is such that at the beginning of horizontal scan the core portion 21a is near saturation. Toward the center of horizontal scan, core portion 21a saturates more and more, until, in the second half of horizontal scan, core portion 21a is substantially in saturation. Center leg 21c because of its larger cross-section is not saturated and thus functions as a magnetic shunt for the entire scan. The effect of the inductance variation of portion 21a is that during the first half of horizontal scan, a decreasing linearity inductance is in series with the deflection winding, while during the second half of scan, because of saturation, little inductance is present. This changing inductance during each horizontal scan causes a decreased horizontal deflection current amplitude in the first half of scan which compensates for the non-linearity of the deflection current in the second half of scan caused by the cumulative losses in the deflection winding and the trace switch, for example. Moving the permanent magnet 22, as indicated in Figure 1 along the line 24, slightly changes the saturation point in order to adjust the linearity correction. Winding 23 thereby functions as the required saturable linearity inductance in series with horizontal deflection winding 50.

When the linearity inductor is wound around portion 21a of core 21, another outer leg, 21b, is available. Magnet 22 is not in close contact with leg 21b. Thus, outer leg 21b, as well as the previously described center leg 21c is also not in saturation. A winding 25 is then wound around outer leg 21b, as illustrated in Figure 1. Loose magnetic coupling exists between core portions 21a and 21b as defined by the geometry of the core. Thus winding 25 may function as the substantially linear or non-saturated inductor of an East-West modulator circuit.

As illustrated in Figure 2, a conductor 14 of winding 25 is coupled through a capacitor 53 to a bi-directionally conductive ITR switch 54 of an East-West or side ITR modulator circuit 55. Switch 54 may comprise an SCR 56 and an oppositely poled diode 57 integrated on the same chip. A resistor 58 is coupled across ITR switch 54. A control circuit 59 is coupled to the gate of SCR 56 and turns on SCR 56 at a vertically varying instant with horizontal retrace. The length of time within horizontal retrace that the inductance of winding 25 is coupled to horizontal deflection winding 50 is thereby varied at a vertical rate, thereby modulating the horizontal scanning current amplitude at a vertical rate for providing side pincushion distortion correction. Control circuit 59 and East-West ITR modulator 55 are fully described in the aforementioned US—A—4,088,931 of P. E. Haferl.

To prevent the vertical modulation component of the horizontal scanning current flowing in linearity inductance winding 23 from undesirably changing the magnetic bias of portion 21a from top to bottom of raster scan, a compensating magnetic flux with a compensating vertical rate flux component is made to flow in portion 21a. This compensating flux is developed by the current flowing in side pincushion correction inductance winding 25, which has flowing in it the horizontal scanning current during each horizontal trace interval.

Conductor 14 of side pincushion inductance winding 25 is coupled to a conductor 11 of linearity inductance winding 23, as illustrated in Figures 1 and 2. A conductor 13 of winding 25 is coupled to ground. During each horizontal trace interval, horizontal deflection winding 50, linearity inductance winding 23, and side pincushion inductance winding 25 are series connected. The vertically modulated horizontal scanning current flows in all three windings. With the winding polarities of windings 23 and 25 as indicated by the polarity dots in Figures 2 and 3, the flux generated by the current flowing in side pincushion inductance winding 25 flows in center leg 21c in the same direction as the flux generated in leg 21a by the current flowing in linearity inductance winding 23.

The horizontal deflection current flowing in linearity winding 23, and thus the flux developed by this current flowing in outer leg 21a, is smaller at the top and bottom of the raster than in the center. However, the current flowing in side pincushion correction inductance of the East-West ITR modulator circuit 55, and thus the flux flowing in center leg 21c, developed by this current, is larger at the top and bottom of the raster than in the center. The increasing flux in center leg 21c compensates for the decreasing flux produced by linearity winding 23. Thus the flux produced by winding 25 changes the magnetic bias of portion 21a in a manner which corrects for the undesirable change in magnetic bias caused by the vertical rate component of the current flowing in linearity inductance winding 23.

Since the L-shaped portion 21a of core 21 and center leg 21c is partly or completely in saturation, no undesirable modulation of the side pincushion correction current flowing in winding 25 occurs. Because of the E-shaped geometry of core 21, and because of the placement of windings 23 and 25 around opposite outer legs of core 21, a comparatively high reluctance path exists for the flux mutually linking both windings 23 and 25. Portion 21a is therefore biased near saturation by magnet 22, whereas the bias point of leg 21b is in the relatively linear region of the B—H hysteresis curve. Thus, the mutual flux linking windings 23 and 25 has a relatively large compensating effect on the inductance of linearity winding 23 but has a relatively small effect on the inductance of side pincushion correction winding 25.

Figure 3 illustrates that portion of the electrical schematic circuit of Figure 2 associated with another combined linearity and side pincushion structure 126 embodying the invention, similar to the structure 26 of Figure 1.

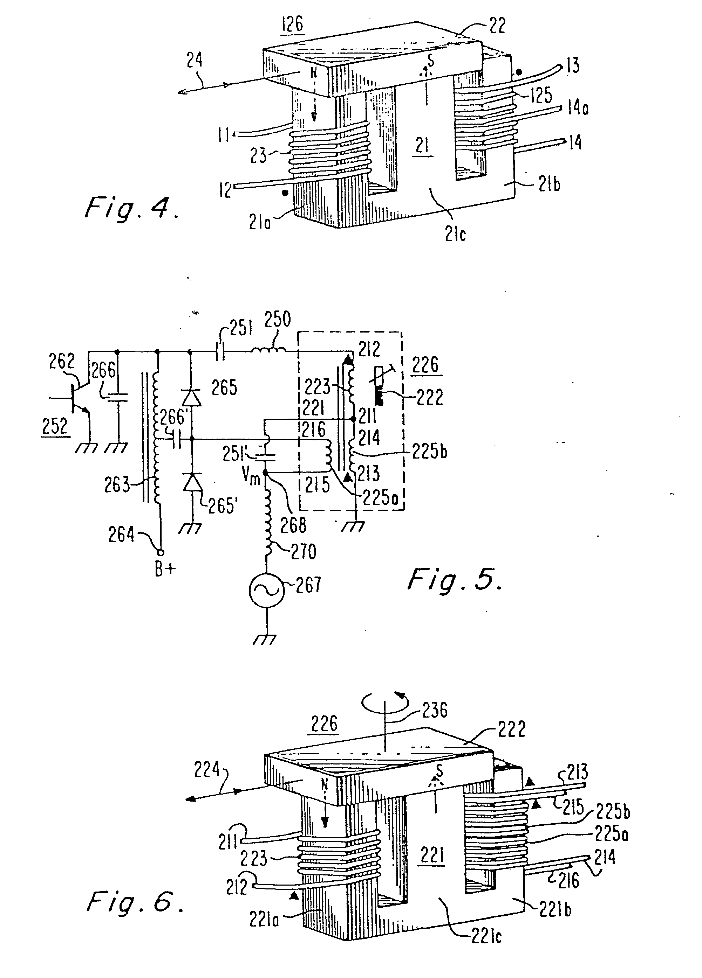

Figure 4 illustrates the core, winding and magnet arrangement for structure 126. In Figures 3 and 4, a transformer, comprising a tapped winding 125, is substituted for the side pincushion correction winding 25 of Figures 1 and 2. A tap conductor 14a instead of the lead conductor 14 of Figures 1 and 2, is now coupled to conductor 11 of linearity inductance winding 23. The circuit arrangement of Figure 3 has the advantage that the current through ITR 54 is transformed down which results in lower dissipation in the device. Also a smaller valued capacitor 53 is required.

Modulator circuits other than East-West ITR modulator circuit 55 of Figure 2 may be coupled to a combined linearity and side pincushion correction structure embodying the invention. As illustrated in Figure 5, a diode modulator circuit 255 may be coupled to a combined linearity and side pincushion correction structure 226. As illustrated in Figure 6, structure 226 is generally constructed similar to the construction of structures 26 and 126 of Figures 1 and 4. An E-shaped core 221 includes a first outer leg or L-shaped portion 221a, a center leg 221c, and a second outer leg 221b. A linearity inductance winding 223 is wound around outer leg 221a. A permanent bias magnet 222, slidable along the line 224, and rotatable about an axis 236, is in contact with legs 221a and 221b but is not in close contact with leg 221b.

Wound around outer leg 221b is a winding 225a for correcting side pincushion distortion with a diode modulator. Concentrically wound with winding 225a is a transformer coupled secondary winding 225b.

As illustrated in Figures 5 and 6, a conductor 213 of secondary winding 225b is coupled to ground and a conductor 214 is coupled to a conductor 211 of linearity inductance winding 223. A conductor 212 of winding 223 is coupled to a horizontal deflection winding 250.

Horizontal deflection winding 250 is coupled to the collector of a horizontal output transistor 262 of a horizontal deflection generator 252 through a trace capacitor 251. The transistor is switched at a horizontal rate by a conventional horizontal oscillator and driver circuit, not illustrated. The collector of transistor 262 is coupled through a winding of a horizontal output or flyback transformer 263 to a B+ supply voltage developed at a terminal 264. A damper diode 265 and retrace capacitor 266 are coupled to transistor 262.

Diode modulator circuit 255 includes a diode 265', a capacitor 266', a capacitor 251' and a modulation voltage source 267 coupled to capacitor 251' through an inductor 270. Modulation voltage source 267 provides a vertical rate parabolic voltage Vm at a terminal 268, with voltage Vm having a minimum at the center of vertical trace.

As illustrated in Figures 5 and 6, a conductor 215 of side pincushion correction inductance winding 225a is coupled to terminal 268 and a conductor 216 is coupled to the junction of diodes 265 and 265'. Diode 265', capacitors 266' and 251' of diode modulator circuit 255 function analogously to respective diode 265, and capacitors 266 and 251 associated with horizontal deflection generator 252 for developing a horizontal sawtooth correction current in side pincushion correction inductance winding 225a. The values of capacitors 266 and 266' and the location of the tap on flyback transformer winding 263 are selected such that the currents flowing in deflection winding 250 and in winding 225a have the same horizontal retrace time.

The amplitude of the sawtooth current flowing in winding 225a is modulated in a parabolic vertical manner. This modulated sawtooth current is transformed by secondary winding 225b to provide a parabolic vertical rate amplitude modulated sawtooth component to the horizontal scanning current, thereby providing the required side pincushion distortion correction. With the exception of combined linearity and side pincushion correction structure 226, the circuit of Figure 5 is similar in operation to arrangements described in the aforementioned US—A—4,024,432 by A. Boekhorst and US—A—3,906,305 by A. H. H. J. Nillesen.

With the conductors of windings 223, 225a and 225b as described above, the relative winding polarities of the three windings are indicated by the polarity triangles of Figures 5 and 6. Accordingly, a compensating flux is developed by the current in winding 225a. This flux is coupled to leg 221a of Figure 6, thereby preventing undesirable changes in the magnetic bias of leg 221a from occurring, as was described similarly for the structure of Figure 1 and the circuit of Figure 2, for example.

With the arrangements embodying the invention, as illustrated in Figures 1—6, one magnetic component 26, 126 or 226 replaces two separate components. For example, a conventional linearity coil may use one ferrite rod core and two magnets and a separate E—W modulator structure may use a separate UU, EE or rod-shaped core. With the inventive embodiments as described, compensatory modulation of the linearity inductance at a vertical frequency rate is obtained by a single structure which also functions to provide, without additional complexity, or separate support housing, a side pincushion correction inductance.

Selected component values for elements of Figures 1 and 2, and selected dimensions of the structure shown in Figure 1 are as follows:

Capacitor 51: 1.0 microfarad
Deflection Winding 50: 1.18 millihenry
                     1.05 ohms

Horizontal Deflecting Current Peak-to-Peak Amplitude, uncorrected for pincushion distortion equals 5.4 ampere peak-to-peak.

Type of kinescope used is A67—700X.

Amount of E—W Pincushion Correction Required is 8%.

Combined Linearity and Pincushion Distortion Correction Structure 26:

E-shaped core 21: Cross-sectional area of an outer leg: 30.5 sq. m.m. Cross-sectional area of center leg: 57 sq. m.m. Full height of a leg: 21.3 m.m. Full length of E-shaped core: 25.8 m.m. Center line to center line separation of an outer leg from the center leg: 10.8 m.m.

E-shaped core 21 material: B32 Cofèlec (ferrite).

Magnet 22:

length: 12 m.m.

width: 25 m.m.

thickness: 6 m.m.

material: ferrite

North-South Pole Strength 400 gauss Winding 23:

67 turns of 0.5 m.m. enameled copper wire

Winding 25:

53 turns of 0.5 m.m. enameled copper wire

E-shaped core 21 may be similar to E25 Cofèlec B32 manufactured by Cofèlec, France.

Magnet 22 may be similar to the magnet used in a N-S pincushion transductor, such as Orèga 5712, manufactured by Orèga, France.

## Claims

1. A magnetic structure, comprising:

a magnetic core (21; 221), including first (21a, 221a) and second (21b; 221b) core portions;

a first winding (23; 223) wound around said first core portion and suited for coupling to a horizontal deflection winding (50; 250);

a second winding (25; 125; 225a, 225b) wound around said second core portion; characterised in that the second winding is suited for receiving a correction current, said correction current including a vertical deflection rate component; and characterized by

magnetic biasing means (22; 222) for providing a magnetic bias flux in said first and second core portions (21a; 221a and 21b; 221b), the disposal of said magnetic biasing means (22; 222) relative to said first and second core portions being such that a) said first core portion is biased near saturation so that coupling of said first winding to a horizontal deflection winding (50; 250) can provide linearity correction to horizontal scanning current flowing in said horizontal deflection winding (50; 250), and b) said second core portion (21b; 221b) is biased in a substantially linear region of its magnetization characteristic so that coupling of said second winding (25; 125; 225a; 225b) to said horizontal deflection winding (50; 250) and to a side pincushion modulation source (55) can provide side pincushion correction to said horizontal scanning current, said first and second core portions cooperating to establish a path of a given reluctance for mutual flux linking said first (23; 223) and second (25; 125; 225a, 225b) windings the winding polarities of said first and second windings and the magnitude of said given reluctance being such as to enable flux generated by said second winding to compensate for undesirable changes during vertical scan of the magnetic bias of said first core portion.

2. A structure according to Claim 1 characterized in that said second winding comprises a modulator inductance (25; 125; 225a; 225b) for said side pincushion correction.

3. A structure according to Claim 1 or 2 characterized in that said magnetic core comprises an E-shaped core (21; 221), said first and second core portions being outer legs of said E-shaped core.

4. A structure according to Claim 3 characterized in that said magnetic biasing means comprises a permanent magnet (22; 222) contacting only said first core portion (21a; 221a) and a center leg (21c; 221c) of said E-shaped core.

## Patentansprüche

1. Magnetische. Einrichtung mit einem Magnetkern (21; 221), der einen ersten (21a; 221a) und einen zweiten (21b; 221b) Kernteil enthält, einer ersten Wicklung (23; 223), die um den ersten Kernteil gewickelt und für eine Kopplung mit einer Horizontalablenkwicklung (50; 250) geeignet ist, einer zweiten Wicklung (25; 125; 225a, 225b), die um den zweiten Kernteil gewickelt ist; dadurch gekennzeichnet, daß die zweite Wicklung für den Empfang eines Korrekturstromes geeignet ist, welcher eine Vertikalablenkfrequenzkomponente enthält; und gekennzeichnet durch eine Vormagnetisierungsvorrichtung (22; 222) zum Erzeugen eines Vormagnetisierungsflusses im ersten und zweiten Kernteil (21a; 221a und 21b; 221b), welche bezüglich des ersten und des zweiten Kernteiles so angeordnet ist, daß a) der erste Kernteil in die Nähe der Sättigung vormagnetisiert ist, so daß die Kopplung der ersten Wicklung mit einer Horizontalablenkwicklung (50; 250) eine Linearitätskorrektur für einen in der Horizontalablenkwicklung (50; 250) fließenden Horizontalablenkstrom bewirken kann, und b) der zweite Kernteil (21b; 221b) in einen im wesentlichen linearen Bereich seiner Magnetisierungskennlinie vormagnetisiert ist, so daß die Kopplung der zweiten Wicklung (25; 125; 225a; 225b) mit der Horizontalablenkwicklung (50; 250) und einer Seiten-Kissenverzeichnungs-Modulationsquelle (55) eine Seiten-Kissenverzeichnungs-Korrektur des Horizontalablenkstromes bewirken kann, wobei der erste oder zweite Kernteil zusammenwirken, um einen Weg vorgegebenen magnetischen Widerstandes für eine gegenseitige Flußverbindung der ersten (23; 223) und der zweiten (25; 125; 225a, 225b) Wicklung zu bilden, wobei die Wicklungspolaritäten der ersten und der zweiten Wicklung und die Größe des vorgegebenen magnetischen Widerstandes so sind, daß der durch die zweite Wicklung erzeugte Fluß in der Lage ist, unerwünschte Änderungen der Vormagnetisierung des ersten Kernteiles während der Vertikalablenkung zu kompensieren.

2. Einrichtung nach Anspruch 1, dadurch gekennzeichnet, daß die zweite Wicklung eine Modulator-Induktivität (25; 125; 225a, 225b) für die Seiten-Kissenverzeichnungs-Korrektor enthält.

3. Einrichtung nach Anspruch 1 oder 2, dadurch gekennzeichnet, daß der Magnetkern einen E-förmigen Kern (21; 221) enthält, wobei der erste und der zweite Kernteil die äußeren Schenkel des E-förmigen Kernes sind.

4. Einrichtung nach Anspruch 3, dadurch gekennzeichnet, daß die Vormagnetisierungsvorrichtung einen Permanentmagnet (22; 222) enthält, der nur den ersten Kernteil (21a; 221a) und einen Mittelschenkel (21c; 221c) des E-förmigen Kernes berührt.

## Revendications

1. Structure magnétique, comprenant:

un noyau magnétique (21; 221), comprenant des première; (21a; 221a) et seconde (21b; 221b) parties de noyau;

un premier enroulement (23; 223) enroulé sur ladite première partie de noyau et pouvant être couplé à un enroulement de déviation horizontale (50; 250);

un second enroulement (25; 125; 225a, 225b) enroulé sur ladite seconde partie de noyau, caractérisé en ce que le second enroulement est adapté à recevoir un courant de correction, ledit courant de correction comprenant une composante à la fréquence de déviation verticale; et caractérisés par

un moyen de polarisation magnétique (22; 222) pour produire un flux de polarisation magnétique dans lesdites première et seconde parties de noyau (21a; 221a et 21b; 221b), la disposition dudit moyen de polarisation magnétique (22; 222) par rapport auxdites première et seconde parties de noyau étant telle que a) ladite première partie de noyau soit polarisée près de la saturation afin que le couplage dudit premier enroulement à un un enroulement de déviation horizontale (50; 250) puisse produire une correction de linéarité d'un courant de balayage horizontal s'écoulant dans ledit enroulement de déviation horizontale (50; 250) et b) ladite seconde partie de noyau (21; 221b) soit polarisée en une région sensiblement linéaire de sa caractéristique de magnétisation afin que le couplage dudit second enroulement (25; 125; 225a, 225b) audit enroulement de déviation horizontale (50; 250) et à ladite source de modulation de coussinet latéral (55) puisse produire la correction de coussinet latéral dudit courant de balayage horizontal, lesdites première et seconde parties de noyau coopérant pour etablir un trajet d'une reluctance donnée pour un flux mutuel liant lesdits premier (23; 223) et second (25; 125; 225a, 225b) enroulements, les polarités desdits premier et second enroulements et la grandeur de ladite reluctance donnée étant telles que cela permette au flux produit par ledit second enroulement de compenser de changements non souhaitables, pendant le balayage vertical, de la polarisation magnétique de ladite première partie de noyau.

2. Structure selon la revendication 1, caractérisée en ce que ledit second enroulement forme une inductance de modulateur (25; 125; 225a, 225b) pour ladite correction en coussinet latéral.

3. Structure selon la revendication 1 ou 2, caractérisée en ce que ledit noyau magnétique comprend un noyau en forme de E (21; 221), lesdites première et seconde parties de noyau étant les branches externes dudit noyau en forme de E.

4. Structure selon la revendication 3, caractérisée en ce que ledit moyen de polarisation magnétique comprend un aimant permanent (22; 222) ne contactant que ladite première partie de noyau (21a, 221a) et une branche centrale (21c; 221c) dudit noyau en forme de E.

**0013598**

Fig. 1.

Fig. 2.

HORIZONTAL
DEFLECTION
GENERATOR

CONTROL
CIRCUIT

TO HOR. DEFL.
WINDING 50

TO EAST–WEST
ITR MODULATOR 55

Fig. 3.

0013598

Fig. 4.

Fig. 5.

Fig. 6.